# EUROPEAN PATENT APPLICATION

(11) **EP 4 574 473 A1**
(43) Date of publication of application: **25.06.2025**
(21) Application number: 23218547.0
(22) Date of filing: 20.12.2023
(51) Int. Cl.: B60G 17/0165, B60G 17/017

(54) **HEIGHT ADJUSTABLE ELECTRIC TRACTION MOTOR ARRANGEMENT**

(71) Applicant: VOLVO TRUCK CORPORATION, 405 08 Göteborg (SE)
(72) Inventor: PETTERSSON, Emil, 449 43 NOL (SE); LARSSON, Lena, 426 74 VÄSTRA FRÖLUNDA (SE)
(74) Representative: Kransell & Wennborg KB

(57) **Abstract**

The present disclosure relates to an electric traction motor arrangement (100) for a vehicle, the electric traction motor arrangement comprising a mounting arrangement (206) attached to, and supporting, an electric motor system (101), a height adjuster (300) connected to the mounting arrangement and connectable to a chassis of the vehicle, and processing circuitry (502) configured to receive distance data of a vertical distance between a position on the chassis and a wheel axle of one of a first and second wheels, and control the height adjuster (300) to move the mounting arrangement (206) in a vertical direction in response to the vertical distance being outside a predetermined distance range such that an angle of the first and second output shafts (202, 204) relative to the corresponding wheel axle of the first and second wheels is within a predetermined angle range.

## Description

### TECHNICAL FIELD

The disclosure relates generally to the technical field of electric traction motors. In particular aspects, the disclosure relates to a height adjustable electric traction motor arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To reduce pollution of environmentally harmful exhaust gases, electric traction motors are being conventionally implemented for vehicles, not only for cars but also for e.g. heavy duty vehicles, such as trucks, buses and working machines. The electric traction motors can be arranged as e.g. wheel hub motors arranged on the wheel hub and feeds torque directly to a corresponding wheel of the vehicle. The electric traction motor(s) may also be arranged as one or more centrally positioned motors connected to one or more wheel pairs via a longitudinally extending propeller shaft and a cardan j oint, or centrally positioned and directly connected to the wheel axles of each of the wheels of a wheel pair.

Positioning the electric traction motor(s) at a central position may be associated with challenges due to the relatively limited space along the chassis of the vehicle. Also, the electric traction motor should preferably keep a sufficient ground clearance while still be able to transmit torque to the wheels of the vehicle in a desirable manner.

### SUMMARY

According to a first aspect of the disclosure, there is provided an electric traction motor arrangement for a vehicle, the electric traction motor arrangement comprising an electric motor system comprising an electric traction motor, the electric motor system comprising a first output shaft configured to connect the electric traction motor to a first wheel of a wheel pair, and a second output shaft configured to connect the electric traction motor to a second wheel of the wheel pair, a mounting arrangement attached to, and supporting, the electric motor system, a height adjuster connected to the mounting arrangement and connectable to a chassis of the vehicle, the height adjuster being configured to controllably adjust a position of the mounting arrangement relative to the chassis, and a computer system comprising processing circuitry operatively coupled to the height adjuster, the processing circuitry being configured to receive distance data of a vertical distance between a position on the chassis and a wheel axle of one of the first and second wheels, and control the height adjuster to move the mounting arrangement in a vertical direction in response to the vertical distance being outside a predetermined distance range such that an angle of the first and second output shafts relative to the corresponding wheel axle of the first and second wheels is within a predetermined angle range.

The first aspect of the disclosure may seek to mitigate the problem of large shaft angles between the electric motor system and the wheels of the vehicle when adjusting the ride height of the vehicle, i.e. when moving the chassis of the vehicle to an elevated position compared to e.g. a normal ride height mode. A technical benefit may include that the angle of the first and second output shafts to the corresponding wheel axle of the wheels of the vehicle is maintained within the predetermined angle range. Accordingly, the chassis of the vehicle is allowed to move up and down relative to the wheels of the vehicle without substantially affecting the angle of the first and second output shafts relative to the corresponding wheels. Keeping the angle between the first and second output shafts relative to the corresponding wheels within the predetermined angle range may enable the electric traction motor to feed the desired torque to the wheels without too severe energy losses. Hence, the efficiency of torque distribution to the wheels may be kept at an optimized level irrespective of the current ride height. In addition, an angle falling outside the predetermined angle range may generate undesirable torque- and force loads to the corresponding first and second output shafts, which may hereby be avoided.

Furthermore, the disclosure of the first aspect may be particularly advantageously implemented for an electric traction motor propelling a pair of so-called dual mounted tire, i.e. a vehicle at which two wheels are provided on each wheel hub. Hence, the dual mounted tire comprises two wheels on each side of the vehicle frame and thus four wheels along a lateral direction of the frame. For such implementations, an inner wheel of the two wheels, to which the output shaft is connected, is positioned transversally closer to the electric motor system and therefore more sensitive to vertical displacement of the electric motor system. In detail, the angle will be higher for a lower displacement for such implementation compared to a single wheel axle where the output shaft has a longer extension.

The first and second wheels of the wheel pair should be construed as a first and a second wheel arranged on a respective lateral side of the chassis of the vehicle, at substantially the same longitudinal position of the chassis. In the above example of a pair of dual axle wheel, the vehicle comprises an additional wheel laterally outside each of the respective first and second wheels of the wheel pair. A longitudinal direction or distance, a vertical direction or distance, and a lateral direction of distance should thus be construed as being relative the chassis of the vehicle when the electric traction motor arrangement is arranged/connected on/to the chassis of the vehicle.

Optionally in some examples, including in at least one preferred example, the processing circuitry is configured to control the height adjuster to move the mounting arrangement in a direction away from the chassis in response to the vertical distance being above an upper limit of the predetermined distance range. A technical benefit may include that, when the chassis is raised relative to the ground level and as such raised relative the wheels of the vehicle, the electric motor system is moved vertically downwards relative to the chassis to maintain the angle within the predetermined angle range.

Optionally in some examples, including in at least one preferred example, the processing circuitry is configured to control the height adjuster to move the mounting arrangement in a direction towards the chassis in response to the vertical distance being below a lower limit of the predetermined distance range. In a similar vein as described above, a technical benefit may include that, when the chassis is lowered towards the ground level and as such lowered towards the wheels of the vehicle, the electric motor system is moved vertically upwards relative to the chassis to maintain the angle within the predetermined angle range.

Optionally in some examples, including in at least one preferred example, the height adjuster comprises a fluidly controlled actuator connectable between the mounting arrangement and the chassis. A technical benefit may include that a relatively rapid response for adjusting the position of the mounting arrangement can be obtained.

Optionally in some examples, including in at least one preferred example, the fluidly controlled actuator is a pneumatically controlled cylinder.

Optionally in some examples, including in at least one preferred example, the height adjuster comprises a valve arranged in fluid communication between the pneumatically controlled cylinder and a source of pressurized air, wherein the processing circuitry is operatively coupled to the valve for controlling a supply of pressurized air to and from the pneumatic cylinder. A technical benefit may include that the processing circuitry may simply control the valve to open or close when there is a desire to adjust the position of the mounting arrangement. According to an example, an inlet valve member of the valve may be arranged in an open position to allow pressurized air to enter the pneumatically controlled cylinder when there is a desire to raise the mounting arrangement. An outlet valve member of the valve may be arranged in an open position to feed pressurized air from the pneumatically controlled cylinder when there is a desire to lower the mounting arrangement. The valve may be arranged in a closed position when there is a desire to maintain the mounting arrangement at a desired position. Thus, the valve may be opened to adjust the position of the mounting arrangement until the mounting arrangement reaches a desired position, at which desired position the valve is closed.

Optionally in some examples, including in at least one preferred example, the fluidly controlled actuator is a hydraulically controlled cylinder.

Optionally in some examples, including in at least one preferred example, the height adjuster comprises a valve arranged in fluid communication between the hydraulically controlled cylinder and source of hydraulic fluid, wherein the processing circuitry is operatively coupled to the valve for controlling a supply of hydraulic fluid to and from the pneumatic cylinder. A technical benefit may include that the processing circuitry may simply control the valve to open or close when there is a desire to adjust the position of the mounting arrangement. According to an example, an inlet valve member of the valve may be arranged in an open position to allow hydraulic fluid to enter the hydraulically controlled cylinder when there is a desire to raise the mounting arrangement. An outlet valve member of the valve may be arranged in an open position to feed hydraulic fluid from the hydraulically controlled cylinder when there is a desire to lower the mounting arrangement. The valve may be arranged in a closed position when there is a desire to maintain the mounting arrangement at a desired position. Thus, the valve may be opened to adjust the position of the mounting arrangement until the mounting arrangement reaches a desired position, at which desired position the valve is closed.

Optionally in some examples, including in at least one preferred example, the mounting arrangement comprises a hinge connectable to the chassis.

Optionally in some examples, including in at least one preferred example, the height adjuster comprises an electric motor operatively coupled to the processing circuitry, the electric motor being connected to the hinge to cause the mounting arrangement to rotate relative to the chassis. A technical benefit may include that an electric motor may respond rapidly to a demand from the processing circuitry. When the electric motor rotates the mounting arrangement, the vertical position of the mounting arrangement is controlled.

Optionally in some examples, including in at least one preferred example, the electric traction motor comprises a motor shaft, and wherein electric motor system further comprises an output shaft connector element connected between each of the first and second output shafts and the motor shaft. A technical benefit may include that the electric traction motor can be positioned at a distance from the first and second output shafts, thereby increasing the flexibility of mounting the electric traction motor arrangement to the vehicle chassis. The output shaft connector element may, for example, be a differential gear or other member that transfers torque from one shaft to two shafts and changes rotation direction from the one shaft to the two shafts.

Optionally in some examples, including in at least one preferred example, the electric traction motor comprises a single motor shaft. It should be understood that the present disclosure may also use a second electric traction motor with a single motor shaft, where the single motor shaft of the second electric traction motor is also connected to the output shaft connector element.

Optionally in some examples, including in at least one preferred example, the electric traction motor is stationary connectable to the chassis of the vehicle, wherein the output shaft connector element is supported by the mounting arrangement. A technical benefit may include that solely the output shaft connector element and the first and second output shafts are movable relative to the chassis. The motor shaft may be pivotably coupled to the electric traction motor for allowing a small rotation when the output shaft connector element moves upwards/downwards relative to the chassis.

Optionally in some examples, including in at least one preferred example, the electric traction motor arrangement further comprising a sensor configured to detect the vertical distance between the position on the chassis and the wheel axle of one of the first and second wheels, wherein the sensor is further configured to transmit data in the form of the distance data to the processing circuitry.

Optionally in some examples, including in at least one preferred example, the sensor is a radar.

Optionally in some examples, including in at least one preferred example, the electric traction motor further comprising lock device configured to lock the mounting arrangement in a preset desired position relative to the chassis. A technical benefit may include that the mounting arrangement can be fixated relative to the chassis after the height adjuster has moved the mounting arrangement to a desired position.

According to a second aspect, there is provided a vehicle comprising an electric traction motor arrangement according to any one of the preceding claims.

Effects and features of the second aspect are largely analogous to those described above in relation to the first aspect.

According to a third aspect, there is provided a computer implemented method of controlling an electric traction motor arrangement of a vehicle, the method comprising determining, by a processing circuitry of a computer system, a vertical distance between a position on a chassis of the vehicle and a wheel axle of one of a first and second wheels of a wheel pair of the vehicle, and controlling, by the processing circuitry, a mounting arrangement, attached to and supporting an electric traction motor, in a vertical direction in response to the vertical distance being outside a predetermined distance range such that an angle of a first and second output shafts of the electric traction motor relative to the wheel axle of the first and second wheels, respectively, is within a predetermined angle range.

Effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an electric traction motor arrangement according to an example,
Fig. 3 is an exemplary illustration of an electric traction motor arrangement according to an example,
Fig. 4 is a schematic exemplary illustration of the electric traction motor arrangement connected to the chassis of the vehicle,
Fig. 5 is an exemplary flow chart of a method of controlling an electric traction motor arrangement, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure seeks to solve the problem of large shaft angles between the electric motor system and the wheels of the vehicle when adjusting the ride height of the vehicle, i.e. when moving the chassis of the vehicle to an elevated position compared to e.g. a normal ride height mode. A technical benefit may include that the angle of the first and second output shafts to the corresponding wheel axle of the wheels of the vehicle can be maintained within the predetermined angle range.

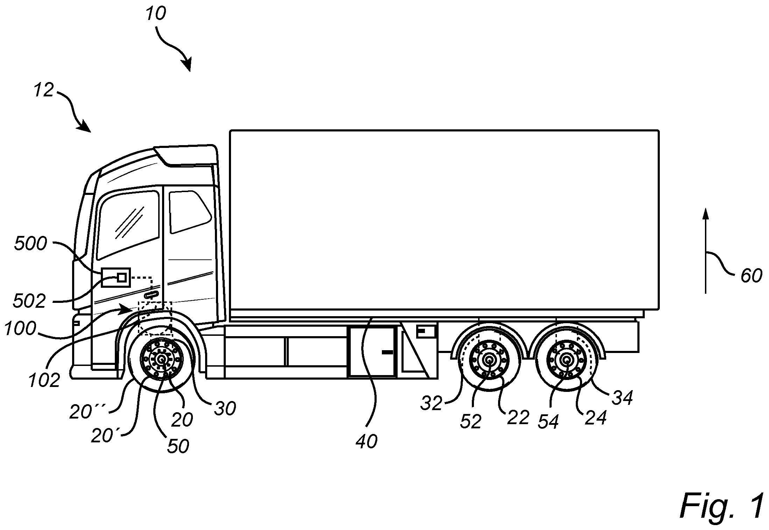

Reference is made to Fig. 1, which is an exemplary illustration of a vehicle 10 according to an example. The exemplified vehicle 10 is a truck and it should be readily understood that the present disclosure may also be intended for vehicles 10 comprising one or more trailer units (not shown) coupled to the trailing unit 12 of the vehicle 10. Alternatively, the vehicle 10 may also comprise a dolly (not shown) arranged between the trailing unit 12 and the front most trailer unit. Further, the vehicle 10 comprises an electric traction motor arrangement 100 comprising at least one electric traction motor 102 operatively connected to at least one pair of wheels 20 of the vehicle 10. In the exemplified illustration of Fig. 1, the electric traction motor 102 is operatively coupled to the pair of front wheels 20 but it should be readily understood that the electric traction motor 102 may alternatively, or additionally, be operatively coupled to one or more of the remaining pair of wheels 22, 24 of the vehicle. The electric traction motor 102 may also be connected to one or more pair of wheels of a trailer when a trailer is forming part of the vehicle 10, or to the wheels of a dolly if such is forming part of the vehicle 10. Accordingly, the depicted position of the electric traction motor 102 in Fig. 1 is merely for illustrative purposes and should not be construed as limited to the disclosure described in the following. The following description will however describe the electric traction motor 102 operatively coupled to the front pair of wheels 20.

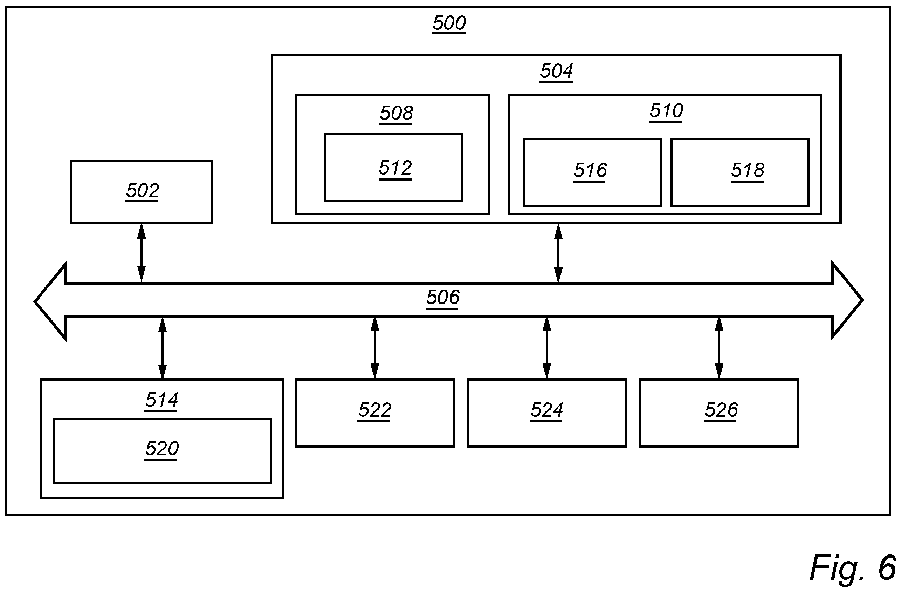

Moreover, the vehicle 10 comprises a computer system 500. The computer system 500, which will be described in further detail below with reference to Fig. 6, comprises processing circuitry 502 operatively coupled to the electric traction motor arrangement 100. The exemplified vehicle 10 also comprises air bellows 30, 32, 34 connected between a chassis 40 of the vehicle 10 and a corresponding wheel axle 50, 52, 54. By the air bellows 30, 32, 34, a vertical 60 position between the chassis 40 and the corresponding wheel axle 50, 52, 54 can be adjusted. In detail, the chassis 40 can be raised and lower relative to the corresponding wheel axle 50, 52, 54 by e.g. feeding/draining the air bellows with/from air.

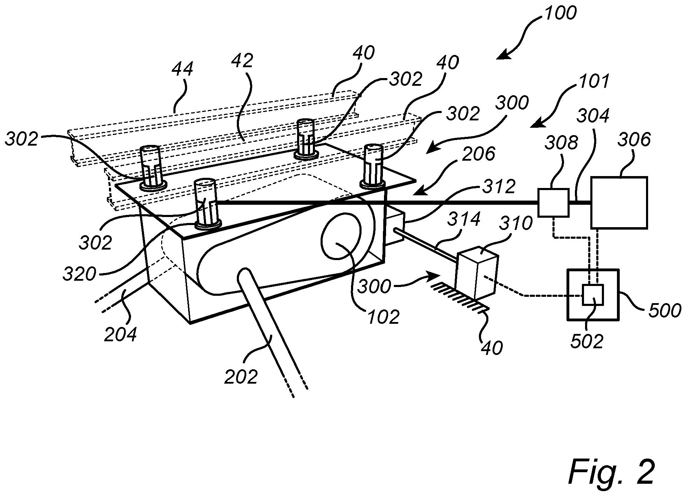

In order to describe the electric traction motor arrangement 100 in further detail, reference is now made to Fig 2 which is an exemplary illustration of an electric traction motor arrangement 100 according to an example. The electric traction motor arrangement 100 comprises an electric motor system 101 comprising the above described electric traction motor 102. Further, the electric motor system 101 further comprises a pair of output shafts, i.e. a first output shaft 202 and a second output shaft 204 each connected to the electric traction motor 102. The first output shaft 202 is in turn operatively connected to a first wheel 20' of the front pair of wheels 20, while the second output shaft 204 is operatively connected to a second wheel 20" of the front pair of wheels 20. The electric traction motor 102 thus applies a propulsion torque on the first 20' and second 20" wheels of the front pair of wheels 20 via the corresponding first 202 and second 204 output shafts.

Furthermore, the electric traction motor arrangement 100 comprises a mounting arrangement 206. The mounting arrangement 206 is attached to, and supports, the electric motor system 101. The mounting arrangement 206 may be formed by e.g. brackets connected to the electric motor system 101. In Fig. 2, the mounting arrangement 206 is attached to the electric traction motor 102. The electric traction motor arrangement 100 also comprises a height adjuster 300. The height adjuster 300 is connected to the mounting arrangement 206 as well as to the chassis 40 of the vehicle 10. Put it differently, the height adjuster 300 is arranged between the mounting arrangement 206 and the chassis 40. As such, the electric motor system 101 is connected to the chassis 40 via the mounting arrangement 206 and the height adjuster 300. The chassis 40 is in Fig. 2 exemplified as comprising a first 42 and a second 44 longitudinally extending frame rail.

The height adjuster 300 is arranged to adjust the relative position between the mounting arrangement 206 and the chassis 40. Since the electric motor system 101 is supported by the mounting arrangement 206, the height adjuster 300 is in turn arranged to adjust a relative position between the electric motor system 101, in Fig. 2 including an adjustment of the electric traction motor 102, and the chassis 40. The height adjuster 300 may thus raise the electric motor system 101 towards the chassis 40 or lower the electric motor system 101 further away from the chassis 40. The height adjuster 300 may be formed by various structural components that are able to adjust the position. Examples of different types of such height adjuster will be presented in the following. The examples described below may be used in isolation or in combination.

The exemplified height adjuster 300 in Fig. 2 comprises fluidly controlled actuator 302. The fluidly controlled actuator 302 is connected between the mounting arrangement 206 and the chassis 40. The height adjuster 300 may also comprise a conduit 304 arranged between the fluidly controlled actuator 302 and a source of pressurized fluid 306, such as e.g. a tank or a vessel comprising a pressurized fluid. In the example, pressurized fluid may be fed from the source of pressurized fluid 306 to the fluidly controlled actuator 302 in order to raise the electric motor system 101 towards the chassis 40. In a similar vein, pressurized fluid may be drained from the fluidly controlled actuator 302 to the source of pressurized fluid 306 to move the electric motor system 101 away from the chassis 40, i.e. to lower the electric motor system 101. In Fig. 2, four fluidly controlled actuators 302 are depicted and it should be readily understood that each of these fluidly controlled actuators 302 may be arranged in fluid communication with the source of pressurized fluid 306. As an alternative, only one or two are fluidly controlled, while the other two are merely followers and not actively fed/drained with/from pressurized fluid. Further, a valve 308 may be arranged in fluid communication between the fluidly controlled actuator 302 and the source of pressurized fluid 306. In particular, the valve may be arranged in the conduit 304. The above described processing circuitry 502 may be operatively coupled to either or both of the valve 308 and the source of pressurized fluid 306. The processing circuitry 502 can thus control the flow of pressurized fluid to/from the fluidly controlled actuator 302.

The fluidly controlled actuator 302 may be a pneumatically controlled cylinder. In such case, the source of pressurized fluid 306 may advantageously be a source of pressurized air. Alternatively, the fluidly controlled actuator 302 may be a hydraulically controlled cylinder. In such case, the source of pressurized fluid 306 may advantageously be a source of pressurized hydraulic fluid. In addition to the latter example, the height adjuster may comprise a hydraulic pump (not shown) arranged between the source of pressurized hydraulic fluid and the hydraulically controlled cylinder.

As an alternative, or in addition, to the above described fluidly controlled actuator 302, the height adjuster 300 may comprise an electric motor 310 for controlling the position of the mounting arrangement 206 relative to the chassis 40. In the example depicted in Fig. 2, the mounting arrangement 206 comprises a hinge 312, wherein the electric motor system 101 is rotatable relative to the chassis at the hinge 312. The electric motor 310 comprises an shaft 314 connecting the electric motor 310 to the hinge 312. The electric motor 310 is further operatively coupled to the processing circuitry 502. The processing circuitry 502 is thus configured to control the electric motor 310. The electric motor 310 can hereby be controlled to rotate the shaft 314, and thus in turn the hinge, to rotate the electric motor system 101 relative to the chassis 40. Hereby, the mounting arrangement 206 can be raised/lowered relative to the chassis 40.

Further, the electric traction motor arrangement 100 may also comprise a lock device 320. The lock device 320 may be arranged to fixate the mounting arrangement at a desired position after the height adjuster 300 has moved the mounting arrangement a desired distance. Thus, the lock device 320 may lock the mounting arrangement in a preset desired position relative to the chassis. The lock device 320 may be a mechanically controlled lock device 320, or an electrically controlled lock device 320 operably coupled to the processing circuitry 502.

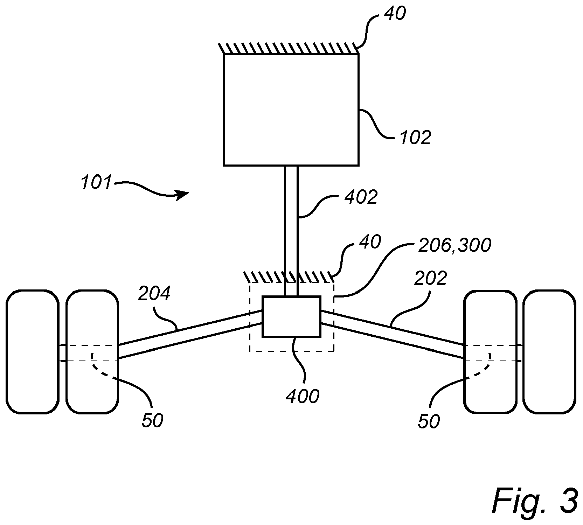

Reference is now made to Fig. 3 which is an exemplary illustration of the electric traction motor arrangement 100 according to another example. In the example described above in relation to Fig. 2, the electric traction motor 102 was directly connected to the mounting arrangement 206. In Fig. 3 on the other hand, the electric traction motor 102 is stationary attached to the chassis 40 of the vehicle 10. The electric motor system 101 further comprises an output shaft connector element 400, such as e.g. a cardan joint. The output shaft connector element 400 is connected between each of the first 202 and second 204 output shafts and a motor shaft 402 of electric traction motor 102. The output shaft connector element 400 is supported by the mounting arrangement 206, which mounting arrangement 206 is connected to the height adjuster 300 in a similar manner as described above in relation to Fig. 2. In the example schematically depicted in Fig. 3, the processing circuitry (not shown in Fig. 3 for simplifying for the skilled reader) controls the height adjuster 206 to move the mounting arrangement 206 relative to the chassis 40, whereby the output shaft connector element 400 will be moved upwards or downwards.

In the example depicted in Fig. 3, the electric traction motor 102 comprises a single motor shaft 402. The single motor shaft 402 may be pivotally connected to a rotor (not shown) of the electric traction motor. In addition, although not illustrated in Fig. 3, the electric traction motor arrangement 100 may comprise a second electric traction motor comprising a second motor shaft connected to the output shaft connector element 400.

Further, the portion of the vehicle illustrated in Fig. 3 comprises two wheel on each wheel axle 50. The wheel located closest to a longitudinal center of the vehicle 10 will for such implementation be positioned transversely closer to the electric motor system 101 compared to an implementation with only one wheel on each side. The first 202 and second 204 output shafts will for the implementation in Fig. 3 thus be shorter compared to the implementation with only one wheel on each side. The exemplified implementation with two wheels on each side as depicted in Fig. 3 is applicable also for the arrangement depicted in Fig. 2.

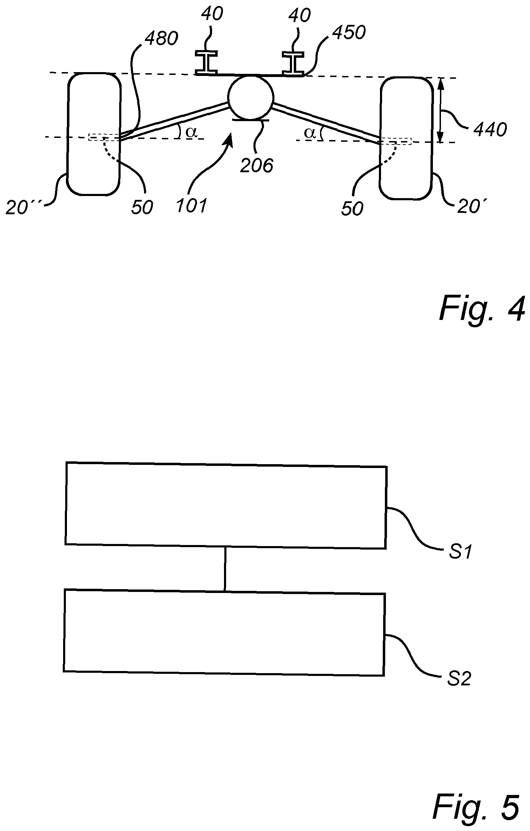

In order to describe the method of controlling the above described electric traction motor arrangement 100, reference is now made to Figs. 4 and 5. Fig. 4 is a schematic exemplary illustration of the electric traction motor arrangement 100 connected to the chassis 40 of the vehicle 10, and Fig. 5 is an exemplary flow chart of the method of controlling the electric traction motor arrangement 100. In Fig. 4, the above described exemplified air bellows are excluded for simplifying for the skilled reader. Also, for simplifying the illustration, the height adjuster 300 is not included in Fig. 4.

During operation of the vehicle 10, the processing circuitry 502 receives S 1 distance data of a vertical distance 440 between a position 450 on the chassis 40 and a wheel axle 50 of one of the first 20' and second 20" wheels. The position 450 on the chassis may, for example, be a portion of the chassis 40 facing the ground level. If the vertical distance 440 is outside a predetermined distance range, the height adjuster 300 is controlled S2 to move the mounting arrangement 206 in the vertical direction 60. The height adjuster 300 preferably moves the mounting arrangement 206 in the vertical direction such that an angle a of the first 202 and second 204 output shafts relative to the corresponding wheel axle 50 of the first and second wheels is within a predetermined angle range.

Preferably, the height adjuster 300 may move the mounting arrangement 206 in a direction away from the chassis when the vertical distance 440 is above an upper limit of the predetermined range. As an example, if the ride height of the chassis high, the angle α of the first 202 and second 204 output shafts relative to the corresponding wheel axle 50 is relatively high and needs to be reduced, whereby the mounting arrangement 206, and thus the electric motor system 201 is moved vertically closer to the wheel axle 50. The angle α will hereby fall within the predetermined angle range. In a similar vein, the height adjuster may move the mounting arrangement 206 in a direction towards the chassis when the vertical distance 440 is below a lower limit of the predetermined range.

The vertical distance 440 between the position 450 on the chassis 40 and the wheel axle 50 of one of the first 20' and second 20" wheels may be detected by a sensor 480 which is configured to transmit data, i.e. sensor data to the processing circuitry. The sensor may be a radar.

During operation of the vehicle, the height adjuster 300 may thus be controlled to adjust the vertical position of the mounting arrangement 206 in response to a change in ride height of the vehicle, wherein the ride height is the distance between the chassis 40 and the wheel axle 50.

Fig. 6 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1: An electric traction motor arrangement for a vehicle, the electric traction motor arrangement comprising: an electric motor system comprising an electric traction motor, the electric motor system comprising a first output shaft configured to connect the electric traction motor to a first wheel of a wheel pair, and a second output shaft configured to connect the electric traction motor to a second wheel of the wheel pair, a mounting arrangement attached to, and supporting, the electric motor system, a height adjuster connected to the mounting arrangement and connectable to a chassis of the vehicle, the height adjuster being configured to controllably adjust a position of the mounting arrangement relative to the chassis, and a computer system comprising processing circuitry operatively coupled to the height adjuster, the processing circuitry being configured to: receive distance data of a vertical distance between a position on the chassis and a wheel axle of one of the first and second wheels, and control the height adjuster to move the mounting arrangement in a vertical direction in response to the vertical distance being outside a predetermined distance range such that an angle of the first and second output shafts relative to the corresponding wheel axle of the first and second wheels is within a predetermined angle range.

Example 2. The electric traction motor arrangement of example 1, wherein the processing circuitry is configured to control the height adjuster to move the mounting arrangement in a direction away from the chassis in response to the vertical distance being above an upper limit of the predetermined distance range.

Example 3. The electric traction motor arrangement of any one of examples 1 or 2, wherein the processing circuitry is configured to control the height adjuster to move the mounting arrangement in a direction towards the chassis in response to the vertical distance being below a lower limit of the predetermined distance range.

Example 4. The electric traction motor arrangement of any one of the preceding examples, wherein the height adjuster comprises a fluidly controlled actuator connectable between the mounting arrangement and the chassis.

Example 5. The electric traction motor arrangement of example 4, wherein the fluidly controlled actuator is a pneumatically controlled cylinder.

Example 6. The electric traction motor arrangement of example 5, wherein the height adjuster comprises a valve arranged in fluid communication between the pneumatically controlled cylinder and a source of pressurized air, wherein the processing circuitry is operatively coupled to the valve for controlling a supply of pressurized air to and from the pneumatic cylinder.

Example 7. The electric traction motor arrangement of example 4, wherein the fluidly controlled actuator is a hydraulically controlled cylinder.

Example 8. The electric traction motor arrangement of example 7, wherein the height adjuster comprises a valve arranged in fluid communication between the hydraulically controlled cylinder and source of hydraulic fluid, wherein the processing circuitry is operatively coupled to the valve for controlling a supply of hydraulic fluid to and from the pneumatic cylinder.

Example 9. The electric traction motor arrangement of any one of the preceding examples, wherein the mounting arrangement comprises a hinge connectable to the chassis.

Example 10. The electric traction motor arrangement of example 9, wherein the height adjuster comprises an electric motor operatively coupled to the processing circuitry, the electric motor being connected to the hinge to cause the mounting arrangement to rotate relative to the chassis.

Example 11. The electric traction motor arrangement of any one of the preceding examples, wherein the electric traction motor comprises a motor shaft, and wherein electric motor system further comprises an output shaft connector element connected between each of the first and second output shafts and the motor shaft.

Example 12. The electric traction motor arrangement of example 11, wherein the electric traction motor comprises a single motor shaft.

Example 13. The electric traction motor arrangement of any one of examples 11 or 12, wherein the electric traction motor is stationary connectable to the chassis of the vehicle, wherein the output shaft connector element is supported by the mounting arrangement.

Example 14. The electric traction motor arrangement of any one of the preceding examples, further comprising a sensor configured to detect the vertical distance between the position on the chassis and the wheel axle of one of the first and second wheels, wherein the sensor is further configured to transmit data in the form of the distance data to the processing circuitry.

Example 15. The electric traction motor arrangement of example 14, wherein the sensor is a radar.

Example 16. The electric traction motor arrangement of any one of the preceding examples, further comprising lock device configured to lock the mounting arrangement in a preset desired position relative to the chassis.

Example 17. A vehicle comprising an electric traction motor arrangement according to any one of the preceding examples.

Example 18. A computer implemented method of controlling an electric traction motor arrangement of a vehicle, the method comprising: determining, by a processing circuitry of a computer system, a vertical distance between a position on a chassis of the vehicle and a wheel axle of one of a first and second wheels of a wheel pair of the vehicle, and controlling, by the processing circuitry, a mounting arrangement, attached to and supporting an electric traction motor, in a vertical direction in response to the vertical distance being outside a predetermined distance range such that an angle of a first and second output shafts of the electric traction motor relative to the wheel axle of the first and second wheels, respectively, is within a predetermined angle range.

Example 19. A computer program product comprising program code for performing, when executed by the processing circuitry, the method of example 18.

Example 20. A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric traction motor arrangement (100) for a vehicle (10), the electric traction motor arrangement comprising:
- an electric motor system (101) comprising an electric traction motor (102), the electric motor system comprising a first output shaft (202) configured to connect the electric traction motor to a first wheel (20') of a wheel pair, and a second output shaft (204) configured to connect the electric traction motor to a second wheel (20") of the wheel pair,
- a mounting arrangement (206) attached to, and supporting, the electric motor system,
- a height adjuster (300) connected to the mounting arrangement and connectable to a chassis of the vehicle, the height adjuster being configured to controllably adjust a position of the mounting arrangement relative to the chassis, and
- a computer system (500) comprising processing circuitry (502) operatively coupled to the height adjuster, the processing circuitry being configured to:
- receive distance data of a vertical distance (440) between a position (450) on the chassis and a wheel axle of one of the first and second wheels, and
- control the height adjuster to move the mounting arrangement in a vertical direction (60) in response to the vertical distance being outside a predetermined distance range such that an angle (α) of the first and second output shafts relative to the corresponding wheel axle (50) of the first and second wheels is within a predetermined angle range.

2. The electric traction motor arrangement of claim 1, wherein the processing circuitry is configured to control the height adjuster to move the mounting arrangement in a direction away from the chassis in response to the vertical distance being above an upper limit of the predetermined distance range.

3. The electric traction motor arrangement of any one of claims 1 or 2, wherein the processing circuitry is configured to control the height adjuster to move the mounting arrangement in a direction towards the chassis in response to the vertical distance being below a lower limit of the predetermined distance range.

4. The electric traction motor arrangement of any one of the preceding claims, wherein the height adjuster comprises a fluidly controlled actuator connectable between the mounting arrangement and the chassis.

5. The electric traction motor arrangement of claim 4, wherein the fluidly controlled actuator is one of a pneumatically controlled cylinder or a hydraulically controlled cylinder.

6. The electric traction motor arrangement of claim 5, wherein the height adjuster comprises a valve arranged in fluid communication between the fluidly controlled actuator and a source of pressurized fluid, wherein the processing circuitry is operatively coupled to the valve for controlling a supply of pressurized fluid to and from the fluidly controlled actuator.

7. The electric traction motor arrangement of any one of the preceding claims, wherein the mounting arrangement comprises a hinge connectable to the chassis.

8. The electric traction motor arrangement of claim 7, wherein the height adjuster comprises an electric motor operatively coupled to the processing circuitry, the electric motor being connected to the hinge to cause the mounting arrangement to rotate relative to the chassis.

9. The electric traction motor arrangement of any one of the preceding claims, wherein the electric traction motor (102) comprises a motor shaft (402), and wherein electric motor system further comprises an output shaft connector element (400) connected between each of the first and second output shafts and the motor shaft.

10. The electric traction motor arrangement of claim 9, wherein the electric traction motor is stationary connectable to the chassis of the vehicle, wherein the output shaft connector element is supported by the mounting arrangement.

11. The electric traction motor arrangement of any one of the preceding claims, further comprising lock device configured to lock the mounting arrangement in a preset desired position relative to the chassis.

12. A vehicle comprising an electric traction motor arrangement according to any one of the preceding claims.

13. A computer implemented method of controlling an electric traction motor arrangement of a vehicle, the method comprising:
- determining, by a processing circuitry of a computer system, a vertical distance between a position on a chassis of the vehicle and a wheel axle of one of a first and second wheels of a wheel pair of the vehicle, and
- controlling, by the processing circuitry, a mounting arrangement, attached to and supporting an electric traction motor, in a vertical direction in response to the vertical distance being outside a predetermined distance range such that an angle of a first and second output shafts of the electric traction motor relative to the wheel axle of the first and second wheels, respectively, is within a predetermined angle range.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
